# EUROPÄISCHE PATENTANMELDUNG

(11) **EP 0 994 625 A2**
(43) Veröffentlichungstag der Anmeldung: **19.04.2000**
(21) Anmeldenummer: 99120465.2
(22) Anmeldetag: 14.10.1999
(51) Int. Cl.: H04N 7/24

(54) **Verfahren zur Bereitstellung von Videodaten**

(30) Priorität: 14.10.1998 DE 19847367
(71) Anmelder: Live Star Online AG, 90429 Nürnberg (DE)
(72) Erfinder: Heinzelmeier, Bernhard, 83278 Traunstein (DE); Gieling, Arthur, 83355 Grabenstätt (DE); Klaus, Yvonne, 63674 Alpenstadt (DE)
(74) Vertreter: Lange, Thomas, Dr.

(57) **Zusammenfassung**

Bei einem Verfahren zur Bereitstellung von auf einem Video-Server gespeicherten Videodaten für eine Mehrzahl von zur Visualisierung der Videodaten geeigneten Endgeräten (1) werden zwei verschiedene Datenübertragungen eingesetzt. Zunächst wird eine paketvermittelte erste Datenübertragung zwischen einem Endgerät (1) und einem Netzwerk-Server (11) eines Datennetzwerks errichtet. Auf dem Netzwerk-Server (11) sind Zugangsdaten bereitgehalten, die Zugangsinformation zu einem Video-Server (10) beinhalten. Unter Verwendung der Zugangsdaten wird anschließend eine leitungsvermittelte zweite Datenübertragung zwischen dem Endgerät (1) und dem Video-Server (10) aufgebaut.

## Beschreibung

Die Erfindung betrifft ein Verfahren zur Bereitstellung von auf einem Video-Server gespeicherten Videodaten für eine Mehrzahl von zur Visualisierung der Videodaten geeigneten Endgeräten, insbesondere Personal Computern (PC) eines Telekommunikationsnetzes.

Im Konsumerbereich nimmt seit einigen Jahren die Anbindung von PCs an Telekommunikationsnetze sprunghaft zu. Dies ist vor allem auf das immer attraktiver werdende Informationsangebot im Internet (und dort insbesondere im World Wide Web (WWW)) und den Preisverfall der auf der Hardwareseite für den Netzzugang erforderlichen technischen Ausrüstung zurückzuführen.

Für die Übertragung von Bild- bzw. Videodaten zu einem PC sind bereits eine Reihe von Techniken vorgeschlagen worden, die aus unterschiedlichen Gründen in der Praxis bisher nur wenig zur Anwendung gekommen sind.

Zum einen ist es bereits bekannt, dem Endverbraucher (im folgenden auch als Nutzer bezeichnet) Videodaten über eine paketvermittelte Datenfernübertragung (DFÜ) zukommen zu lassen. Als Beispiel für eine paketvermittelte Datenübertragung sei das Internet genannt, bei dem gemäß dem Internet-Protokoll (IP) Datenpakete von einem Sender über mehrere Netze hinweg zu einem Empfänger transportiert werden. Die Datenpakete werden von dem IP als voneinander unabhängige Datenpakete transportiert. Die Übertragung ist verbindungslos und nicht garantiert. Insbesondere garantiert das IP weder die Einhaltung einer bestimmten Reihenfolge bei der Ablieferung der Datenpakete bei dem Empfänger, noch eine minimale Übertragungsrate. Dies hat zur Folge, daß erhebliche Verzögerungen bei der Datenübertragung über Internet auftreten können und die Übertragungsrate je nach Netzauslastung unter 10 kbit/s liegen kann.

Gegenwärtig eignet sich das Internet daher lediglich zur Übertragung von Standbildern bzw. von Bildfolgen mit niedrigen Bildraten (etwa 5 Bilder/s) und geringer Bildqualität.

Neben dem Bandbreitenproblem treten im Internet bei der kommerziellen Nutzung auch Schwierigkeiten bei der Zahlungsabwicklung auf. Gegenwärtig werden Zahlungen im Internet meistens mittels Kreditkarte getätigt. Dieses Zahlungsmittel trifft wegen vermeintlicher Sicherheitsmängel häufig auf geringe Kundenakzeptanz und behindert damit die Einführung von kommerziellen Dienstangeboten beispielsweise auch im Bereich der Übertragung von Videodaten.

Ein wesentlicher Vorteil des Internets besteht jedoch darin, daß es prinzipiell die Voraussetzungen für "Video on demand" bietet. Bei "Video on demand" kann ein Zuschauer aus einem Programmangebot die ihn interessierende Sendung zu jeder beliebigen Zeit abrufen.

Eine sich von der paketvermittelten Datenübertragung grundlegend unterscheidende Form einer DFÜ wird durch das Konzept der leitungsvermittelten Datenübertragung realisiert. Die leitungsvermittelte Datenübertragung ist direkt und unmittelbar und baut eine exklusive, feste Datenleitung ("Standleitung") auf. Es kann eine feste Datenübertragungsrate garantiert werden. Bei dem Dienste-integrierenden digitalen Fernmeldenetz ISDN beträgt beispielsweise die auf einer "Leitung" (dem sogenannten B-Kanal) verfügbare Bandbreite 64 kbit/s.

Auch im Bereich der leitungsvermittelten Datenübertragung sind bereits Vorschläge für die Übertragung von Videodaten bekannt geworden. ADSL (Asymmetrical Digital Subscriber Line) ist ein neuartiges Übertragungsverfahren für die Hochgeschwindigkeitsübertragung von Daten über normale Telefonleitungen. Da mit ADSL Übertragungsgeschwindigkeiten von 6 Mbit/s möglich sind, ist diese Technik hervorragend für die Übertragung von Videodaten geeignet. Bisher ist diese Technik jedoch noch in der Erprobungsphase.

Die DE 196 45 368 A1 beschreibt ein Verfahren zur Fernübertragung von Daten zwischen zwei vorgegebenen Einrichtungen, bei dem zwischen einer paketvermittelten Übertragung und einer leitungsvermittelten Übertragung ohne eine Unterbrechung der Datenübertragung gewechselt werden kann. Dadurch kann beispielsweise während eines Telefongesprächs wiederholt zwischen einer ISDN- und einer Internet-Übertragung gewechselt werden.

Der Erfindung liegt die Aufgabe zugrunde, ein Verfahren zum Bereitstellen von Videodaten anzugeben, das es einerseits erlaubt, einen möglichst breiten Interessentenkreis anzusprechen und das andererseits einem Nutzer eine gegenüber derzeitigen Verfahren verbesserte Bildqualität beim Betrachten der Videoübertragung bietet.

Zur Lösung der Aufgabe sind die Merkmale des Anspruchs 1 vorgesehen.

Durch das erfindungsgemäße Verfahren werden die bei der ersten paketorientierten Datenübertragung insbesondere im WWW vorhandenen vielfältigen Anbietungs- und Suchmöglichkeiten in technisch einfacher, aber wirkungsvoller Weise mit einer leitungsvermittelten zweiten Datenübertragung kombiniert, über die Videodaten von dem Video-Server zu dem Endgerät des Nutzers transportiert werden. Da die Videodaten nur bei der leitungsvermittelten zweiten Datenübertragung übertragen werden, kann eine feste Datenübertragungsrate und damit eine gleichmäßige Bildqualität unabhängig von äußeren Einflüssen garantiert werden.

Der Aufbau der leitungsvermittelten zweiten Datenübertragung wird dabei durch eine Zugangsinformation ermöglicht, die auf dem Netzwerk-Server bereitgehalten und im Rahmen der ersten paketvermittelten Datenübertragung dem Nutzer verfügbar gemacht wird.

Neben den erwähnten Vorzügen des erfindungsgemäßen Verfahrens im Hinblick auf das Anbieten und das Übertragen der Videodaten ist ferner günstig, daß das erfindungsgemäße Verfahren einen Abrechnungsmodus ermöglicht, der kundenseitig auf eine hohe Akzeptanz stößt. Da bei der zweiten Datenübertragung (der Übertragung der Videodaten) eine feste, exklusive Datenverbindung aufgebaut wird, kann diese in einfacher Weise auf Zeitbasis über den Netzbetreiber des Telekommunikationsnetzes abgerechnet werden. Beispielsweise kann hierfür eine von dem Betreiber des Telekommunikationsnetzes bereitgestellte Gebührenrufnummer verwendet werden.

Vorzugsweise werden die Zugangsdaten durch Herunterladen derselben von dem Netzwerk-Server auf das Endgerät auf diesem verfügbar gemacht. Das Herunterladen kann beispielsweise durch Anklicken eines Hyperlinks erfolgen, der auf einem auf dem Netzwerk-Server aufliegenden Hypertextdokument (Website) des Anbieters bereitgestellt ist.

Als Zugangsdaten können zweckmäßigerweise eine ISDN-Rufnummer oder eine ISDN-Adresse verwendet werden.

Vorzugsweise wird die zweite Datenübertragung nach Herunterladen der Zugangsdaten automatisch mittels eines im Endgerät abgespeicherten Zugangssoftware-Programms aufgebaut, welches die Zugangsdaten als Eingabeparameter verwendet. Der Leitungsaufbau zu dem Video-Server vollzieht sich dann sofort nach der Beendigung der ersten Datenübertragung, ohne daß hierfür weitere Aktionen seitens des Nutzers erforderlich werden.

Nach einer vorteilhaften Ausgestaltung des erfindungsgemäßen Verfahrens wird auch das Zugangssoftware-Programm auf dem Netzwerk-Server bereitgehalten, derart, daß das Zugangssoftware-Programm vor dem Aufbau der zweiten Datenübertragung auf das Endgerät heruntergeladen werden kann. Durch diese Maßnahme wird einem Erstnutzer ohne eine vorherige Anmeldung oder dergleichen der sofortige Aufbau einer zweiten Datenübertragung zum Betrachten einer Videosendung ermöglicht. Auf der anderen Seite wird dem Anbieter des Videoprogramms eine einfache Pflege des Zugangssoftware-Programms ermöglicht, indem er bei einer Aktualisierung ("Update") desselben lediglich durch einen entsprechenden Hinweis in seinem Hypertextdokument dafür sorgen muß, daß die neue Version von den Nutzern heruntergeladen wird.

Nach einer weiteren vorteilhaften Ausgestaltung der Erfindung handelt es sich bei dem Netzwerk-Server um einen WWW-Server. Dadurch ist gewährleistet, daß die auf dem Netzwerk-Server bereitgehaltenen Zugangsdaten in einfacher Weise von einem großen Interessentenkreis gefunden werden können, da das im WWW benutzte Protokoll HTTP (Hypertext Transport Protocol) eine ausgesprochen effektive und flexible Informationssuche von Dokumenten im Internet gestattet.

In zweckmäßiger Weise erfolgt die zweite Datenübertragung über ein (öffentliches oder privates) Fernsprechwählnetz, insbesondere über ISDN. Der Zugriff auf den Video-Server kann dann in einfacher Weise über den Aufbau einer ISDN-Wählverbindung hergestellt werden.

Grundsätzlich kann vorgesehen sein, daß auf dem Video-Server nur ein Videoprogramm mit einer anbieterseitig fest vorgegebenen Abfolge von Videosendungen verfügbar ist. Sämtliche Nutzer beziehen dann zur gleichen Zeit dieselbe Videosendung.

Vorzugsweise ist jedoch vorgesehen, daß auf dem Video-Server eine Mehrzahl von Videoprogrammen gleichzeitig verfügbar ist. In diesem Fall kann der Nutzer eine gewünschte Videosendung durch Anwahl des entsprechenden Programms auswählen.

Für die Anwahl eines gewünschten Videoprogramms bestehen verschiedene Möglichkeiten. Nach einer ersten erfindungsgemäßen Ausführungsvariante kann die Anwahl eines gewünschten Videoprogramms im Rahmen der zweiten Datenübertragung erfolgen. In diesem Fall ruft der Nutzer bei Zugriff auf den Video-Server zunächst eine Datei auf, die einen Überblick über die aktuellen Programme und laufenden Sendungen gibt. Bei Anwahl eines gewünschten Programms steigt der Nutzer dann in die in diesem Videoprogramm gerade laufende Videosendung ein.

Die Programmanwahl kann auch bereits während der ersten Datenübertragung durchgeführt werden. In diesem Fall kennzeichnet sich eine bevorzugte Verfahrensvariante dadurch, daß auf dem Netzwerk-Server eine Tabelle mit den verfügbaren Videoprogrammen zugeordneten Programmidentifikationsdaten bereitgehalten ist, und daß im Rahmen der ersten Datenübertragung die dem gewünschten Videoprogramm zugeordneten Programmidentifikationsdaten auf das Endgerät heruntergeladen werden. Ein ggf. zuvor heruntergeladenes Zugangssoftware-Programm kann dann die heruntergeladenen Programmidentifikationsdaten als Eingabeparameter verwenden und bewirkt, daß bei der Aufnahme der zweiten Datenübertragung mittels dieser Programmidentifikationsdaten das gewünschte Videoprogramm angewählt wird.

Schließlich besteht noch eine weitere erfindungsgemäß vorgesehene Möglichkeit darin, daß der Nutzer einzelne Videosendungen zu beliebiger Zeit gezielt abrufen kann. Die Auswahl der einzelnen Sendungen kann in entsprechender Weise wie die bereits beschriebene Anwahl einzelner Programme entweder im Rahmen der ersten oder im Rahmen der zweiten Datenübertragung erfolgen. Eine vorteilhafte Ausgestaltung des erfindungsgemäßen Verfahrens kennzeichnet sich dadurch, daß auf dem Netzwerk-Server eine Tabelle mit den verfügbaren Videosendungen zugeordneten Sendungsidentifikationsdaten bereitgehalten ist, und daß im Rahmen der ersten Datenübertragung eine oder mehrere den gewünschten Videosendungen zugeordnete Sendungsidentifikationsdaten auf das Endgerät heruntergeladen werden.

Die heruntergeladenen Sendungsidentifikationsdaten können wie die Programmidentifikationsdaten als Eingabeparameter eines Zugangssoftware-Programms verwendet werden, derart, daß bei Aufnahme der zweiten Datenübertragung mittels dieser Sendungsinformationsdaten die gewünschte(n) Videosendung(en) gezielt abgerufen wird (werden).

Weitere vorteilhafte Ausführungsvarianten des erfindungsgemäßen Verfahrens sind in den Unteransprüchen angegeben.

Die Erfindung wird nachfolgend anhand eines Ausführungsbeispiels unter Bezugnahme auf die Zeichnung näher erläutert; in dieser zeigt:
- Fig. 1: eine schematische Darstellung eines Netzaufbaus zur Realisierung des erfindungsgemäßen Verfahrens;
- Fig. 2: eine schematische Darstellung einer Tabelle mit Sendungsidentifikationsdaten; und
- Fig. 3: ein Flußdiagramm zur Erläuterung erfindungsgemäßer Verfahrensschritte zur Bereitstellung von Videodaten.

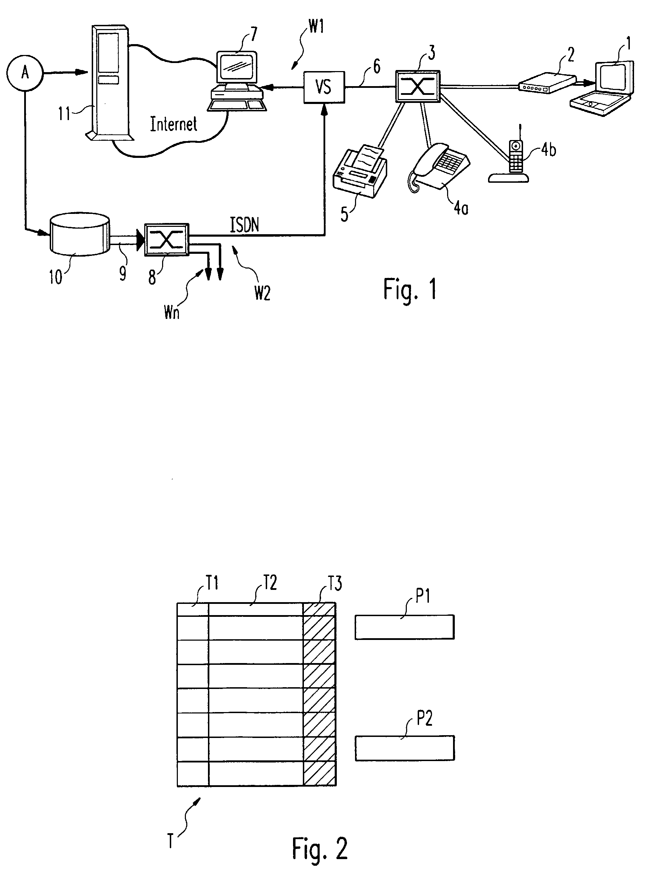

Nach Fig. 1 ist ein Datenendgerät, beispielsweise ein PC 1 über ein Modem 2 mit einer Telekommunikationsanlage (TK-Anlage) 3 verbunden. An die TK-Anlage 3 können weitere Endgeräte wie beispielsweise drahtgebundene oder drahtlose Telefone 4a, 4b sowie ein Faxgerät 5 angeschlossen sein.

Das Modem 2 kann ein analoges Modem oder ein ISDN-Modem sein. Ferner kann es sich um einen ISDN-Adapter handeln, der entweder als externer Terminal-Adapter oder als eine in dem PC eingesetzte ISDN-Karte realisiert ist.

Die TK-Anlage 3 ist über eine ISDN-Leitung 6 mit einer Vermittlungsstelle VS eines Fernsprechnetzes verbunden. Die ISDN-Leitung 6 verfügt über zwei B-Kanäle mit jeweils einer Übertragungsrate von 64 kbit/s und einen separaten D-Kanal mit einer Übertragungsrate von 16 kbit/s. Es steht somit eine Netto-Gesamtübertragungskapazität von 144 kbit/s an der durch die TK-Anlage 3 repräsentierten ISDN-Schnittstelle zur Verfügung.

Die Vermittlungsstelle VS leitet eingehende Verbindungswünsche entsprechend der gewählten ISDN-Rufnummer an den entsprechenden Teilnehmer weiter. Auf diese Weise wird eine ISDN-Wählverbindung aufgebaut.

In Fig. 1 sind zwei verschiedene ISDN-Wählverbindungen W1 und W2 dargestellt. Zum einen ist eine Durchschaltung der einlaufenden ISDN-Leitung 6 zu einem Einwählpunkt POP (Point of Presence) 7 des Internets dargestellt. Der Einwählpunkt POP ist in Form eines Host-Rechners 7 realisiert. Der Host-Rechner 7 wird van einem Internet Service Provider (ISP) zur Verfügung gestellt und ermöglicht einen bedarfsorientierten Zugang zum Internet. Die ISDN-Wählverbindung zwischen dem PC 1 und dem Host-Rechner 7 wird im folgenden mit W1 bezeichnet.

Die zweite dargestellte ISDN-Wählverbindung W2 erstreckt sich zwischen dem PC 1 und einer weiteren TK-Anlage 8. Die TK-Anlage 8 kann gleichzeitig weitere ISDN-Wählverbindungen Wn zu anderen Teilnehmern des Fernsprechnetzes aufbauen.

Die Datenübertragung über sämtliche ISDN-Wählverbindungen W1, W2, ..., Wn ist leitungsorientiert, d.h. es bestehen exklusive, transparente Verbindungen mit vorgegebener Datenübertragungsrate. Darüber hinaus ist die Datenübertragung im Falle des hier betrachteten ISDN-Netzes zumindest zwischen der TK-Anlage 3 und dem Host-Rechner 7 bzw. der weiteren TK-Anlage 8 digital.

Der Host-Rechner 7 baut über das Internet eine Datenverbindung zu einem WWW-Server 11 des Internets auf. Die Datenübertragung zwischen dem WWW-Server 11 und dem Host-Rechner 7 erfolgt auf der Grundlage des Internet-Kommunikationsprotokolls TCP/IP und wird in Form einer Paketvermittlung abgewickelt, d.h. die einzelnen Datenpakete werden gemäß ihren Zieladressen in Abhängigkeit von der Netzauslastung auf geeigneten Übertragungswegen von einem Router (nicht dargestellt) zum nächsten weitergeleitet. Dabei treten je nach Auslastung des Internets Bandbreitenengpässe auf, die eine Verzögerung der Datenübertragung zur Folge haben.

Die durch die Internet-Verbindung und erste Wählverbindung W1 realisierte Datenübertragung zwischen dem PC 1 und dem WWW-Server 11 wird als erste Datenübertragung DÜ1 bezeichnet.

Die weitere TK-Anlage 8 ist über eine breitbandige Videodatenleitung 9 mit einem Video-Server 10 verbunden. Der Video-Server 10 ist durch einen leistungsfähigen Rechner realisiert, welcher vorzugsweise auf einem UNIX-Betriebssystem arbeitet. Der Video-Server 10 ermöglicht die Archivierung, die Pflege sowie den Zugriff auf Bilddatenbestände, die üblicherweise auf Massenspeichern großer Kapazität wie beispielsweise CD-ROMs, DVDs usw. abgelegt sind. Darüber hinaus kann er Einrichtungen aufweisen, die die Digitalisierung und Kompression von analogen Videosignalen, wie sie beispielsweise bei herkömmlichen Fernsehprogrammen verwendet werden, ermöglichen. Die digitalisierten bzw. bereits in digitaler Form abgespeicherten Videodaten werden von dem Video-Server 10 in ein Datenformat gebracht, das von üblichen, anwenderseitig vorhandenen Video-Audio-Softwareprogrammen unterstützt wird. Die Videodaten können von dem Video-Server 10 auch in mehreren unterschiedlichen Datenformaten bereitgestellt werden.

In der Praxis wird der Video-Server 10 zumeist von einem kommerziellen Anbieter A betrieben.

Dieser Anbieter A nutzt ferner einen Speicherbereich auf dem WWW-Server 11, indem er dort eine Website unterhält, die von Netzteilnehmern mittels gängiger Web-Browser leicht auffindbar ist.

In dem erwähnten Speicherbereich sind Zugangsdaten abgespeichert, die einen Zugangsinformation zu dem Video-Server 10 beinhalten und zum Aufbau der zweiten Datenübertragung DÜ2 zwischen dem PC 1 und dem Video-Server 10 benötigt werden.

Beispielsweise können die Zugangsdaten die ISDN-Rufnummer der TK-Anlage 8 darstellen. Die ISDN-Rufnummer ist maximal 15stellig und besteht aus einer Länder- und Ortsnetz-Kennzahl sowie der Teilnehmer-Rufnummer.

Die Zugangsdaten können auch in Form einer ISDN-Adresse vorliegen. Eine ISDN-Adresse setzt sich aus der ISDN-Rufnummer und einer 32stelligen ISDN-Subadresse zusammen. Mit der ISDN-Subadresse können beliebige Datenstationen in einem LAN (Local Area Network) adressiert werden, das über ein Gateway mit dem ISDN-Fernsprechnetz verbunden ist. Der Video-Server 10 kann daher in nicht dargestellter Weise auch in einem LAN angeordnet sein, wobei dann anstelle der TK-Anlage 8 ein Gateway beispielsweise in Form eines ISDN-Routers vorgesehen sein muß.

Außer den Zugangsdaten können in dem Speicherbereich des WWW-Servers 11 Programminformationsdaten, Sendungsinformationsdaten und geeignete Anwenderprogramme abgelegt sein. Dies wird anhand Fig. 2 verdeutlicht, die in schematisierter Weise die Gestaltung einer Website zeigt, welche entsprechend der Speicherbereichsbelegung aufgebaut ist.

In dem hier dargestellten Beispiel umfaßt die Website (neben nicht dargestellter Werbung und dergleichen) eine Tabelle T, die eine Übersicht über sämtliche im Video-server 10 aktuell verfügbaren Videosendungen gibt. In einer ersten Spalte T1 der Tabelle T ist eine die einzelnen Videosendungen durchnummerierende laufende Nummer vermerkt, und in einer zweiten Spalte T2 ist der Titel der zugehörigen Videosendung angegeben. Die Spalte T3 enthält eine beim Aufruf der Website für den Betrachter nicht sichtbare Sendungsidentifikationkennziffer, die die entsprechende Videosendung identifiziert.

Jede Zeile der Tabelle T ist in Art eines Hyperlinks realisiert.

Ferner sind auf der Website zwei weitere Hyperlinks P1 und P2 angeordnet. Die Hyperlinks P1 und P2 ermöglichen das Herunterladen von zwei Anwenderprogrammen P1 und P2 (deren Bezeichnung hier identisch mit der Bezeichnung der entsprechenden Hyperlinks gewählt ist) von dem WWW-Server 11 auf ein Endgerät 1 eines Internet-Teilnehmers. P1 ist eine übliche Video-Audio-Software, mit der eingehende Videodaten entpackt und visualisiert, d.h. in ein Bild umgewandelt werden können. Bei P2 handelt es sich um ein Programm, das zum Aufbau der zweiten Datenübertragungsverbindung DÜ2 erforderlich ist. Beispielsweise kann P2 ein Terminal-Programm sein, das über AT Befehle (Attention Command Set) Betriebssystem-unabhängig analoge oder ISDN-Modems 2 zum Aufbau der ISDN-Wählverbindung W2 in Art eines Mailbox-Verfahrens ansteuert. Die beiden Programme P1 und P2 können auch als Gesamtprogramm ausgeführt sein.

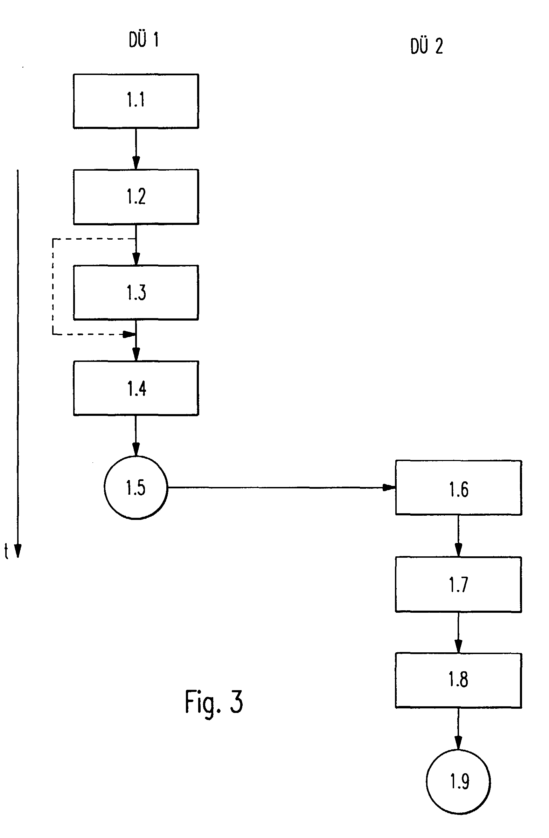

Fig. 3 verdeutlicht in beispielhafter Weise einen erfindungsgemäßen Zugriffsablauf, mit dem einem Nutzer an seinem Datenendgerät 1 Videodaten von dem Video-Server 10 bereitgestellt werden. Der Pfeil t repräsentiert dabei die Zeit.

In einem ersten Schritt 1.1 gelangt der Nutzer mittels der Wählverbindung W1 über den Host-Rechner 7 in das Internet. Dort möchte sich der Nutzer Videosendungen anschauen.

Wie bereits erwähnt, können über Internet wegen der geringen Bandbreite gegenwärtig nur Videosendungen mit relativ schlechter Qualität und "springenden" Einzelbildern bezogen werden, und moderne Zahlungsformen wie Ecash oder Cybercash, bei denen "elektronische (virtuelle) Geldbörsen" für den Kunden auf einem Speichermedium verwaltet werden, sind zur Zeit noch nicht einsatzbereit. Dennoch stößt das Angebot, über Internet Videosendungen zu beziehen, aufgrund des einfachen Zugangs, der guten Suchmöglichkeiten und der hohen Programmvielfalt auf wachsendes Kundeninteresse.

In Schritt 1.2 wird durch Aufrufen der Website des Anbieters A eine Datenübertragung von dem Host-Rechner 7 zu dem WWW-Server 11 hergestellt. Damit ist die erste Datenübertragung DÜ1 aufgebaut. Dem Nutzer steht die in Fig. 2 dargestellte Übersicht der auswählbaren Videosendungen zur Verfügung.

In dem optionalen Schritt 1.3 kann der Nutzer je nach Bedarf die Programme P1 und/oder P2 herunterladen. In der Regel wird ein Erstnutzer zumindest das Terminal-Programm P2 herunterladen müssen, um über die erforderliche Software zum Aufbau der zweiten Datenübertragung DÜ2 zu verfügen.

In Schritt 1.4 greift der Nutzer auf die Zugangsdaten für die Errichtung der zweiten ISDN-Wählverbindung W2 zu. Dies kann beispielsweise in der Form geschehen, daß der Nutzer durch Anklicken der entsprechenden Hyperlinks in der Tabelle T eine Auswahl von gewünschten Videosendungen trifft und dabei die entsprechenden Sendungsidentifikationskennziffern (Spalte T3) auf das Endgerät 1 herunterläd. Beim Herunterladen der Sendungsidentifikationskennziffern können auch die Zugangsdaten auf das Endgerät 1 heruntergeladen werden.

Es ist auch möglich, die Zugangsdaten bereits mit dem Herunterladen des Terminal-Programms P2 (Schritt 1.3) auf dem Endgerät 1 verfügbar zu machen.

In einem nächsten Schritt 1.5 wird die erste Datenübertragung DÜ1 beendet. Dies geschieht üblicherweise dadurch, daß sich der Nutzer bei dem Host-Rechner 7 abmeldet. Damit wird auch die erste ISDN-Wählverbindung W1 abgebrochen.

Zum Aufbau der zweiten Wählverbindung W2 wird in Schritt 1.6 auf dem Endgerät 1 das Terminal-Programm P2 aufgerufen. Dieses greift dabei auf die zur Verfügung stehenden Zugangsdaten zurück. Der Aufruf von P2 kann selbsttätig erfolgen.

Nach dem Errichten der zweiten ISDN-Wählverbindung W2 kann in Schritt 1.7 unter der Kontrolle des Terminal-Programms P2 eine Kommunikation mit dem Video-Server 10 erfolgen. Im Rahmen dieser Kommunikation teilt das Endgerät 1 dem Video-Server 10 beispielsweise die im Rahmen der ersten Datenübertragung DÜ1 ausgewählten Videosendungen anhand ihrer Sendungsidentifikationskennziffern mit.

Es ist auch möglich, daß im Rahmen dieser Kommunikation weitere Videosendungen ausgewählt werden, oder daß zu diesem Zeitpunkt erstmals eine Auswahl von gewünschten Videosendungen erfolgt. In letzterem Fall dient das auf der Website dargestellte Programmangebot lediglich der Information des Nutzers bzw. - aus Sicht des Anbieters - der Werbung bzw. des Kundenfangs und ermöglicht nicht die direkte Auswahl bestimmter Videosendungen.

Nach Wahl der gewünschten Videosendung wird in Schritt 1.8 die Videosendung gestartet und die entsprechenden Videodaten über die zweite Datenübertragung DÜ2 dem Endgerät 1 zugestellt.

Selbst wenn für die zweite Datenübertragung DÜ2 nur einer der beiden D-Kanäle des ISDN-Netzes genutzt wird, ist die zweite Datenübertragung DÜ2 deutlich schneller als die erste Datenübertragung DÜ1 über Internet. Somit kann im Vergleich zu über Internet angebotenen Videosendungen eine erheblich bessere Bildqualität bzw. eine schnellere Bildfolge erzielt werden.

Da die erste Datenübertragung DÜ1 zum Zeitpunkt der zweiten Datenübertragung DÜ2 nicht mehr besteht, steht dem Nutzer aber auch die gesamte Übertragungskapazität des ISDN-Netzes zur Verfügung, d.h. es können für die Übertragung der Videodaten beide D-Kanäle des ISDN-Netzes verwendet werden. In diesem Fall ist eine Datenübertragungsrate von 128 kbit/s erreichbar.

In Schritt 1.9 wird die zweite Datenübertragung DÜ2 beendet. Bei Verwendung einer Gebührenwahlnummer für W2 kann die zweite Datenübertragung DÜ2 einfach und mißbrauchsicher abgerechnet werden.

Weitere Ausführungsvarianten des erfindungsgemäßen Verfahrens bestehen darin, daß der Video-Server 10 im Rahmen eines oder mehrerer laufender Programme zu jedem Zeitpunkt immer nur eine Videosendung pro Programm anbietet. In diesem Fall können in der Website eine Programmübersicht und/oder auch nur die oder der Titel der gerade laufenden Videosendung(en) angegeben und fortlaufend aktualisiert werden. Falls mehrere Programme angeboten werden, besteht die Möglichkeit einer Programmanwahl, die in derselben Weise wie die geschilderte Auswahl einer Videosendung durchgeführt werden kann. Auch in diesem Fall werden die Zugangsdaten für den Aufbau der zweiten Datenübertragung DÜ2 auf dem Netzwerk-Server 11 bereitgehalten im Rahmen der ersten Datenübertragung DÜ1 bezogen.

Alle beschriebenen Ausführungsvarianten sind funktionell vergleichbar und ermöglichen stets, daß unter Einsatz verhältnismäßig einfacher technischer Mittel eine gezielte Kombination der Internet-spezifischen Vorteile von ausgezeichneten Angebots- und Suchmöglichkeiten und der Vorteile einer ISDN-Übertragung mit ihrer garantierten und zumindest gegenwärtig höheren Bandbreite geschaffen wird.

## Patentansprüche

1. Verfahren zur Bereitstellung von auf einem Video-Server gespeicherten Videodaten für eine Mehrzahl von zur Visualisierung der Videodaten geeigneten Endgeräten (1), insbesondere PCs eines Telekommunikationsnetzes, bei dem eine paketvermittelte erste Datenübertragung (DÜ1) zwischen einem Endgerät (1) und einem Netzwerk-Server (11) eines Datennetzwerks aufgebaut wird, auf dem Netzwerk-Server (11) Zugangsdaten bereitgehalten werden, die Zugangsinformation zu dem Video-Server (10) beinhalten, und unter Verwendung der Zugangsdaten eine leitungsvermittelte zweite Datenübertragung (DÜ2) zwischen dem Endgerät (1) und dem Video-Server (10) aufgebaut wird.

2. Verfahren zur Bereitstellung von Videodaten nach Anspruch 1,
**dadurch gekennzeichnet,**
daß die Zugangsdaten durch Herunterladen von dem Netzwerk-Server (11) auf das Endgerät (1) auf diesem verfügbar gemacht werden.

3. Verfahren zur Bereitstellung von Videodaten nach Anspruch 2,
**dadurch gekennzeichnet,**
daß es sich bei den Zugangsdaten um eine ISDN-Rufnummer oder eine ISDN-Adresse handelt.

4. Verfahren zur Bereitstellung von Videodaten nach einem der Ansprüche 2 oder 3,
**dadurch gekennzeichnet,**
daß die zweite Datenübertragung (DÜ2) nach dem Herunterladen der Zugangsdaten automatisch mittels eines im Endgerät (1) abgespeicherten Zugangssoftware-Programms (P2) aufgebaut wird, welches die Zugangsdaten als Eingabeparameter verwendet.

5. Verfahren zur Bereitstellung von Videodaten nach Anspruch 4,
**dadurch gekennzeichnet,**
daß das Zugangssoftware-Programm (P2) auf dem Netzwerk-Server (11) bereitgehalten wird, und
daß das Zugangssoftware-Programm (P2) auf das Endgerät (1) herunterladbar ist.

6. Verfahren zur Bereitstellung von Videodaten nach einem der vorhergehenden Ansprüche,
**dadurch gekennzeichnet,**
daß der Netzwerk-Server (11) ein WWW-Server ist.

7. Verfahren zur Bereitstellung von Videodaten nach einem der vorhergehenden Ansprüche,
**dadurch gekennzeichnet,**
daß die zweite Datenübertragung (DÜ2) über ein Fernsprechwählnetz, insbesondere über ISDN erfolgt.

8. Verfahren zur Bereitstellung von Videodaten nach einem der vorhergehenden Ansprüche,
**dadurch gekennzeichnet,**
daß die zweite Datenübertragung (DÜ2) mit Ausnahme einer bei der Aufnahme der zweiten Datenübertragung erfolgenden Einwahlprozedur eine eindirektionale Datenübertragung von dem Video-Server (10) zu dem Endgerät (1) ist.

9. Verfahren zur Bereitstellung von Videodaten nach einem der vorhergehenden Ansprüche,
**dadurch gekennzeichnet,**
daß auf dem Video-Server (10) eine Mehrzahl von Videoprogrammen gleichzeitig verfügbar ist.

10. Verfahren zur Bereitstellung von Videodaten nach Anspruch 9,
**dadurch gekennzeichnet,**
daß eine Anwahl eines gewünschten Videoprogramms im Rahmen der zweiten Datenübertragung (DÜ2) getroffen werden kann.

11. Verfahren zur Bereitstellung von Videodaten nach Anspruch 9,
**dadurch gekennzeichnet,**
daß auf dem Netzwerk-Server (11) eine Tabelle (T) mit den Videoprogrammen zugeordneten Programmidentifikationsdaten bereitgehalten ist, und
daß im Rahmen der ersten Datenübertragung (DÜ1) die dem gewünschten Videoprogramm zugeordneten Programmidentifikationsdaten auf das Endgerät (1) heruntergeladen werden.

12. Verfahren zur Bereitstellung von Videodaten nach Anspruch 11,
**dadurch gekennzeichnet,**
daß ein im Endgerät (1) abgespeichertes Zugangssoftware-Programm (P2) die heruntergeladenen Programmidentifikationsdaten als Eingabeparameter verwendet, und
daß bei der Aufnahme der zweiten Datenübertragung (DÜ2) mittels der Programmidentifikationsdaten das gewünschte Videoprogramm anwählbar ist.

13. Verfahren zur Bereitstellung von Videodaten nach einem der vorhergehenden Ansprüche,
**dadurch gekennzeichnet,**
daß im Rahmen der zweiten Datenübertragung (DÜ2) eine Auswahl einer gewünschten Videosendung getroffen werden kann.

14. Verfahren zur Bereitstellung von Videodaten nach einem der vorhergehenden Ansprüche,
**dadurch gekennzeichnet,**
daß auf dem Netzwerk-Server (11) eine Tabelle (T) mit den Videosendungen zugeordneten Sendungsidentifikationsdaten (T3) bereitgehalten ist, und
daß im Rahmen der ersten Datenübertragung (DÜ1) die der oder den gewünschten Videosendungen zugeordneten Sendungsidentifikationsdaten (T3) auf das Endgerät (1) heruntergeladen werden.

15. Verfahren zur Bereitstellung von Videodaten nach Anspruch 14,
**dadurch gekennzeichnet,**
daß ein im Endgerät (1) abgespeichertes Zugangssoftware-Programm (P2) die heruntergeladenen Sendungsidentifikationsdaten (T3) als Eingabeparameter verwendet, und
daß bei der Aufnahme der zweiten Datenübertragung (DÜ2) mittels der Sendungsidentifikationsdaten die gewünschte Videosendung auswählbar ist.

16. Verfahren zur Bereitstellung von Videodaten nach einem der vorhergehenden Ansprüche,
**dadurch gekennzeichnet,**
daß für die zweite Datenübertragung (DÜ2) beide Basiskanäle von ISDN mit einer Gesamtübertragungsrate von 128 kbit/s genutzt werden.
